# FASCICULE DE BREVET EUROPEEN

(11) **EP 0 837 909 B1**
(45) Date de publication et mention de la délivrance du brevet: **11.02.2004**
(21) Numéro de dépôt: 97923148.7
(22) Date de dépôt: 06.05.1997
(51) Int. Cl.: C08L 95/00, C09D 195/00

(54) **COMPOSITIONS BITUME/POLYMERE A STABILITE AMELIOREE ET LEUR APPLICATION A LA REALISATION DE REVETEMENTS**
BITUMEN/POLYMER ZUSAMMENSETZUNGEN MIT VERBESSERTER STABILITÄT UND IHRE VERWENDUNG FÜR BESCHICHTUNGEN
BITUMEN/POLYMER COMPOSITIONS WITH IMPROVED STABILITY AND THEIR APPLICATION IN CARRYING OUT SURFACING OPERATIONS

(30) Priorité: 10.05.1996 FR 9605827
(43) Date de publication de la demande: 29.04.1998
(73) Titulaire: TotalFinaElf France, 92400 Courbevoie (FR)
(72) Inventeur: PLANCHE, Jean-Pascal, F-38540 Saint-Just-Chaleyssin (FR); LACOUR, Claude, F-38200 Vienne (FR); TURELLO, Patrick, F-69340 Francheville (FR)
(74) Mandataire: Jolly, Jean-Pierre
(86) Numéro de dépôt international: PCT/FR1997/000811
(87) Numéro de publication internationale: WO 1997/043341

(56) Documents cités:
- EP-A- 0 384 254
- WO-A-87/06253
- FR-A- 1 511 604

## Description

L'invention a trait à des compositions bitume/polymère ayant une stabilité améliorée se traduisant, notamment, par une très bonne aptitude au stockage à chaud et par d'excellentes propriétés mécaniques. Elle se rapporte encore à l'application desdites compositions à la réalisation de revêtements et en particulier de revêtements superficiels routiers, d'enrobés ou encore de revêtement d'étanchéité.

Il est connu d'utiliser des compositions bitumineuses comme revêtements de surfaces diverses et en particulier comme enduits superficiels routiers à condition que ces compositions possèdent un certain nombre de qualités mécaniques essentielles.

Ces qualités mécaniques sont appréciées, en pratique, en déterminant, par des essais normalisés, une série de caractéristiques mécaniques, dont les plus utilisées sont les suivantes :
- température de ramollissement (en abrégé TBA), exprimée en °C et déterminée par l'essai Bille et Anneau défini par la norme NF T 66008,
- point de fragilité ou point de Fraass, exprimé en °C et déterminé selon la norme IP 80/53,
- pénétrabilité, exprimée en 1/10 de mm et déterminée selon la norme NF T 66004,
- caractéristiques rhéologiques en traction déterminées selon la norme NF T 46002 et comportant les grandeurs :
   . contrainte au seuil σₛ en bars,
   . allongement au seuil εₛ en %,
   . contrainte à la rupture σᵣ en bars,
   . allongement à la rupture εᵣ en %.

En général, les bitumes conventionnels ne présentent pas simultanément l'ensemble des qualités requises et l'on sait depuis longtemps que l'addition de polymères variés à ces bitumes conventionnels permet de modifier favorablement les propriétés mécaniques desdits bitumes et de former des compositions bitume/polymère ayant des qualités mécaniques améliorées par rapport à celles des bitumes seuls.

Les polymères susceptibles d'être ajoutés aux bitumes peuvent être des élastomères tels que polyisobutylène, polyisoprène, polybutadiène, polychloroprène, caoutchouc butyle, copolymères statistiques éthylène/propylène (EP), terpolymères statistiques éthylène/propylène/diène (EPDM), polynorbornène ou encore des plastomères tels que polypropylène, polyéthylènes, copolymères éthylène/acétate de vinyle, copolymères éthylène/acrylate de méthyle, copolymères éthylène/acrylate de butyle.

Les compositions bitume/polymère à base d'un bitume ou mélange de bitumes et d'un ou plusieurs polymères du type précité ont une stabilité limitée au stockage. Il se produit assez rapidement une démixtion entre la phase bitumineuse et la phase polymère, avec comme conséquence une dégradation des propriétés physicomécaniques desdites compositions au bout d'un temps relativement réduit de stockage.

On a trouvé que l'incorporation de polymères oléfiniques porteurs de groupements fonctionnels époxy ou COOH à des compositions bitume/polymère, constituées d'un bitume ou mélange de bitumes et d'un ou plusieurs polymères tels que précités, améliorait notablement la stabilité desdites compositions au stockage et par la même assurait le maintien voire même une amélioration de leurs caractéristiques physicomécaniques.

L'invention a pour objet des compositions bitume/polymère, à stabilité améliorée, comportant un bitume ou mélange de bitumes et, comptés en poids du bitume ou mélange de bitumes, 0,3 % à 20 % et plus particulièrement 0,5 % à 10 % d'au moins un polymère primaire choisi dans le groupe formé par les homopolymères de diènes conjugués, les copolymères de diènes conjugués entre eux, les polynorbornènes, les polyisobutylènes, le caoutchouc butyle, les homopolymères d'oléfines en C₂ à C₄, les copolymères d'éthylène et de propylène, les terpolymères d'éthylène, de propylène et d'un diène ou d'une alpha-oléfine en C₄ à C₁₂ et les copolymères d'éthylène et d'au moins un monomère A de formule 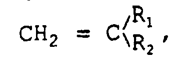 où R₁ désigne H, CH₃ ou C₂H₅ et R₂ représente un radical -COOR₅, -OR₅, -OOCR₆ ou phényle avec R₅ désignant un alkyle en C₁ à C₁₀ et de préférence en C₁ à C₆ et R₆ représentant H ou un alkyle en C₁ à C₃, lesdites compositions se caractérisant en ce qu'elles renferment en outre, comptés en poids du bitume ou mélange de bitumes, 0,01 % à 12 % et de préférence 0,1 % à 5 % d'un polymère oléfinique à groupements fonctionnels époxy ou COOH choisis parmi les copolymères renfermant, en poids, x % de motifs issus de l'éthylène ou du propylène, y % de motifs issus d'un ou plusieurs monomères A précités, z % de motifs issus d'au moins un monomère B de formule 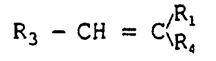 et v % de motifs issus d'un ou plusieurs monomères C différents des monomères A et B, avec R₁ désignant H, CH₃ ou C₂H₅, R₃ désignant H, COOH ou COOR₅, R₄ représentant un radical -COOH, 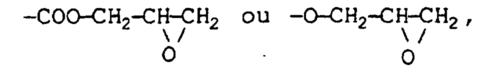 R₅ étant un radical alkyle en C₁ à C₁₀ et de préférence en C₁ à C₆ et x, y, z et v représentant des nombres tels que 40 ≤ x ≤ 99,9, 0 ≤ y ≤ 50, 0,1 ≤ z ≤ 20 et 0 ≤ v ≤ 15 avec x+y+z+v = 100, à l'exclusion des compositions bitume/polymère ci-dessus, qui referment, en poids du bitume ou mélange de bitumes, soit (i) 0,1% à 10% de copolymère oléfinique à groupements époxy et, simultanément, comme polymères primaires, 0,1% à 10% d'un copolymère d'éthylène et d'un monomère ayant la formule 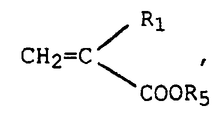 R₁ et R₅ ayant la signification donnée plus haut, 0% à 10% d'un élastomère thermoplastique D et 0% à 10% d'un copolymère EVA ou bien (ii) 0,5% à 4% de copolymère oléfinique à groupements époxy et, simultanément à titre de polymères primaires utilisés conjointement, 2% à 6% d'un élastomère thermoplastique D et 0,5% à 5% d'un copolymère EVA, l'élastomère D étant choisi parmi les polybutènes, les polybutadiènes, les polyisoprènes, les copolymères éthylène/propylène, les copolymères éthylène/ butène et les copolymères éthylène/diènes.

De préférence, dans les copolymères précités x, y, z et v sont tels que 50 ≤ x ≤ 99,5, 0 ≤ y ≤ 40, 0,5 ≤ z ≤ 15 et 0 ≤ v ≤ 10 avec x+y+z+v = 100.

Les monomères A de formule 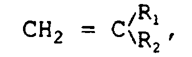 qui fournissent, dans le copolymère les contenant, des motifs 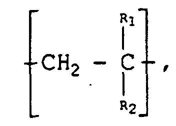 sont en particulier choisis parmi le formiate de vinyle, l'acétate de vinyle, le propionate de vinyle, le butyrate de vinyle, les éthers de vinyle CH₂ = CH-O-R₅ où R₅ est un radical alkyle en C₁ à C₁₀ et de préférence en C₁ à C₆ tel que méthyle, éthyle, propyle, butyle, pentyle, hexyle, les acrylates et méthacrylates d'alkyle respectivement de formule CH₂ = CH-COOR₅ et 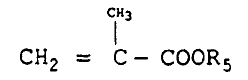 où R₅ a la signification donnée ci-dessus.

Les monomères B de formule 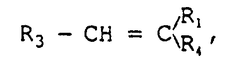 qui fournissent dans le copolymère oléfinique fonctionnalisé des motifs 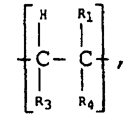 sont en particulier choisis parmi l'acide maléique et son anhydride, l'acide acrylique, l'acide méthacrylique, les maléates acides d'alkyle de formule HOOC-CH = CH-COOR₇ où R₇ est un radical alkyle en C₁ à C₆ tel que méthyle, éthyle, propyle, butyle, les acrylates et méthacrylates de glycidyle de formule 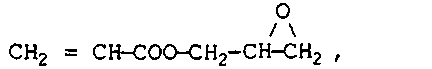 et 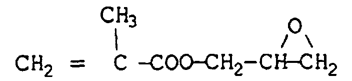 respectivement, l'alcool vinylique et le vinyléther de glycidyle de formule

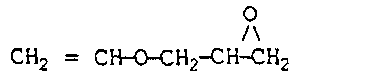

Les monomères C dont la présence dans le copolymère oléfinique est facultative, sont des monomères polymérisables par voie radicalaire différents des monomères A et B, comme, par exemple, CO, SO₂ et acrylonitrile.

En particulier, les copolymères oléfiniques porteurs de groupements fonctionnels époxy ou COOH sont choisis parmi :
(a) les copolymères statistiques d'éthylène et d'un monomère B choisi parmi l'acide acrylique, l'acide méthacrylique, l'acide maléique ou son anhydride, l'acrylate de glycidyle et le méthacrylate de glycidyle, qui renferment, en poids, 80 % à 99,7 % et de préférence 85 % à 99,5 % d'éthylène ;
(b) les terpolymères statistiques d'éthylène, d'un monomère A choisi parmi l'acétate de vinyle et les acrylates ou méthacrylates d'alkyle à reste alkyle en C₁ à C₆ tel que méthyle, éthyle, propyle, butyle, hexyle, et d'un monomère B choisi parmi l'acide acrylique, l'acide méthacrylique, l'acide maléique ou son anhydride, l'acrylate de glycidyle et le méthacrylate de glycidyle, qui renferment, en poids, 0,5 % à 40 % de motifs issus du monomère A et 0,5 % à 15 % de motifs issus du monomère B, le reste étant formé de motifs issus de l'éthylène ; et
(c) les copolymères résultant du greffage d'un monomère B choisi parmi l'acide acrylique, l'acide méthacrylique, l'acide maléique ou son anhydride, l'acrylate de glycidyle et le méthacrylate de glycidyle, sur un substrat consistant en un polymère choisi parmi les polyéthylènes, notamment polyéthylènes basse densité, les polypropylènes et les copolymères statistiques d'éthylène et d'acétate de vinyle ou d'éthylène et d'acrylate ou de méthacrylate d'alkyle à reste alkyle en C₁ à C₆ tel que méthyle, éthyle, propyle, butyle, hexyle, qui renferment, en poids, 40 % à 99,7 % et de préférence 50 % à 99 % d'éthylène, lesdits copolymères greffés renfermant, en poids 0,5 % à 15 % de motifs greffés issus du monomère B.

Sont particulièrement préférés, les copolymères oléfiniques à groupements fonctionnels époxy ou COOH choisis parmi :
(i) les terpolymères statistiques d'éthylène, d'acrylate ou méthacrylate d'alkyle à reste alkyle en C₁ à C₆ tel que méthyle, éthyle, butyle, et d'anhydride maléique, qui renferment, en poids, 0,5 % à 40 % de motifs issus d'acrylate ou méthacrylate d'alkyle et 0,5 % à 15 % de motifs issus de l'anhydride maléique, le reste étant formé de motifs issus de l'éthylène ;
(ii) les terpolymères statistiques d'éthylène, d'acrylate ou méthacrylate d'alkyle à reste alkyle en C₁ à C₆ tel que méthyle, éthyle, butyle, et d'acrylate ou méthacrylate de glycidyle, qui renferment, en poids, 0,5 % à 40 % de motifs issus d'acrylate ou méthacrylate d'alkyle et 0,5 % à 15 % de motifs issus d'acrylate ou méthacrylate de glycidyle, le reste étant formé de motifs issus de l'éthylène ;
(iii) les polyéthylènes basse densité greffés anhydride maléique et les polypropylènes greffés anhydride maléique, qui renferment, en poids, 0,5 % à 15 % de motifs greffés issus de l'anhydride maléique ;
(iv) les polyéthylènes basse densité greffés acrylate ou méthacrylate de glycidyle et les polypropylènes greffés acrylate ou méthacrylate de glycidyle, qui renferment, en poids, 0,5 % à 15 % de motifs greffés issus du dérivé glycidyle.

Avantageusement, les copolymères oléfiniques porteurs de groupements fonctionnels époxy ou COOH, utilisés pour produire la composition bitume/polymère, ont des masses moléculaires telles que l'indice de fluidité desdits copolymères, déterminé selon la norme ASTM D 1238 (essai réalisé à 190°C sous une charge de 2,16 kg), a une valeur, exprimée en grammes par 10 minutes, comprise entre 0,3 et 3000 et de préférence entre 0,5 et 900.

Le bitume ou mélange de bitumes, que l'on utilise pour la mise en oeuvre du procédé selon l'invention, est choisi avantageusement parmi les divers bitumes qui possèdent une viscosité cinématique à 100°C comprise entre 0,5x10⁻⁴ m²/s et 3x10⁻² m²/s et de préférence entre 1x10⁻⁴ m²/s et 2x10⁻² m²/s. Ces bitumes peuvent être des bitumes de distillation directe ou de distillation sous pression réduite ou encore des bitumes soufflés ou semi-soufflés, des résidus de désasphaltage au propane ou au pentane, des résidus de viscoréduction, voire même certaines coupes pétrolières ou des mélanges de bitumes et de distillats sous vide ou encore des mélanges d'au moins deux des produits venant d'être énumérés. Avantageusement, le bitume ou mélange de bitumes utilisé dans le procédé selon l'invention, outre une viscosité cinématique comprise dans les intervalles précités, présente une pénétrabilité à 25°C, définie suivant la norme NF T 66004, comprise entre 5 et 800 et de préférence entre 10 et 400.

Le polymère primaire peut être en particulier tel que polybutadiène, polyisoprène, polychloroprène, copolymères butadiène/isoprène, polynorbornène, polyisobutylène, caoutchouc butyle, polyéthylène haute densité, polyéthylène basse densité, polypropylène, polybutène, copolymères statistiques éthylène/propylène (EP), terpolymères statistiques éthylène/propylène/diène (EPDM), copolymères éthylène/acétate de vinyle (EVA), copolymères éthylène/acrylate d'un alkyle en C₁ à C₆, notamment copolymères éthylène/acrylate de méthyle et copolymères éthylène/acrylate de butyle, et copolymères éthylène/méthacrylate d'un alkyle en C₁ à C₆, notamment copolymères éthylène/méthacrylate d'éthyle et copolymères éthylène/méthacrylate de butyle, copolymères éthylène/styrène, copolymères éthylène/butène/styrène.

Le cas échéant, au moins une partie du polymère primaire peut être constituée de déchets broyés dudit polymère.

La composition bitume/polymère est préparée en mettant en contact le ou les polymères primaires et le ou les polymères oléfiniques fonctionnalisés à groupements époxy ou COOH avec le bitume ou mélange de bitumes, dans des proportions choisies dans les intervalles définis précédemment, en opérant à des températures comprises entre 100°C et 230°C, plus particulièrement entre 120°C et 190°C, et sous agitation, pendant une durée d'au moins 10 minutes, généralement de l'ordre de quelques dizaines de minutes à quelques heures et, par exemple, de 10 minutes à 8 heures et plus particulièrement de 10 minutes à 5 heures pour former une masse homogène constituant la composition bitume/polymère. Le polymère primaire peut être incorporé au bitume ou mélange de bitumes avant ou après le polymère oléfinique à groupements époxy ou COOH, une incorporation simultanée pouvant être également envisagée.

Au cours de sa constitution, la composition bitume/polymère peut être encore additionnée de 1 % à 40 % et plus particulièrement de 2 % à 30 %, en poids du bitume, d'un agent fluxant, qui peut consister, notamment, en une huile hydrocarbonée présentant un intervalle de distillation à pression atmosphérique déterminé selon la norme ASTM D 86-67, compris entre 100°C et 600°C et situé plus spécialement entre 150°C et 400°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale, est suffisamment "lourde" pour limiter l'évaporation au moment de son addition au bitume et en même temps suffisamment "légère" pour être éliminée au maximum après répandage de la composition bitume/polymère la contenant, de manière à retrouver les mêmes propriétés mécaniques qu'aurait présentées, après répandage à chaud, la composition bitume/polymère préparée sans utiliser d'agent fluxant. L'agent fluxant peut être ajouté au milieu réactionnel que l'on forme à partir du bitume, de l'élastomère réticulable au soufre et de l'agent de couplage donneur de soufre, à un moment quelconque de la constitution dudit milieu réactionnel, la quantité d'agent fluxant étant choisie, dans les intervalles définis plus haut, pour être compatible avec l'usage final désiré sur le chantier.

Le milieu à base de bitume ou mélange de bitumes, de polymère ou polymères primaires, de polymère(s) oléfinique(s) porteur(s) de groupements époxy ou COOH et éventuellement d'agent fluxant, qui donne naissance à la composition bitume/polymère, peut encore renfermer un ou plusieurs additifs non polymères susceptibles de réagir avec les groupements époxy ou COOH du polymère oléfinique fonctionnalisé. Ces additifs réactifs peuvent être en particulier des amines, notamment polyamines, primaires ou secondaires, des alcools, notamment polyols, des acides, notamment polyacides, ou encore des sels métalliques.

Des additifs réactifs du type amine sont, par exemple, des diamines aromatiques telles que diamino-1, 4 benzène, diamino-2, 4 toluène, diaminonaphtalène, bis(amino-4 phényl) sulfone, bis (amino-4 phényl) éther, bis (amino-4 phényl) méthane, des diamines aliphatiques ou cycloaliphatiques telles que celles de formule H₂N - R₁₃ -NH₂ où R₁₃ désigne un radical alkylène en C₂ à C₁₂ ou cycloalkylène en C₆ à C₁₂, par exemple éthylènediamine, diaminopropane, diaminobutane, diaminohexane, diaminooctane, diaminodécane, diaminododécane, diaminocyclohexane, diaminocyclooctane, diaminocyclododécane, des polyéthylènepolyamines ou polypropylènepolyamines telles que diéthylènetriamine, triéthylènetétramine, tétraéthylènepentamine, dipropylènetriamine, ou encore des amines ou polyamines grasses, c'est-à-dire des amines ou polyamines renfermant un radical alkyl ou alkényl en C₁₂ à C₁₈ relié à l'atome d'azote d'un groupement amine.

Des additifs réactifs du type alcool sont, en particulier, des polyols tels que diols ou triols et notamment des diols de formule HO - R₁₄ - OH, où R₁₄ désigne un radical hydrocarboné, notamment un radical alkylène en C₂ à C₁₈, arylène en C₆ à C₈ et cycloalkylène en C₆ à C₈, et des polyétherdiols de formule HO [C_{q} H_{2q} O]ᵣH où q est un nombre allant de 2 à 6 et notamment égal à 2 ou 3 et r est un nombre au moins égal à 2 et par exemple allant de 2 à 20. Des exemples de tels polyols sont tels que éthylène glycol, propylène glycol, butylène glycol, diéthylène glycol, triéthylène glycol, tétraéthylène glycol, hexanediol, octane diol.

Des additifs réactifs du type acide sont, en paticulier, des polyacides de formule HOOC - R₁₄ -COOH, où R₁₄ a la signification donnée plus haut. Des exemples de tels polyacides sont tels que acide phtalique, acide téréphtalique, acide malonique, acide succinique, acide adipique, acide glutarique.

Des additifs réactifs du type sel métallique sont, en particulier, des composés tels que hydroxydes, oxydes, alcoolates, carboxylates comme formiates et acétates, méthoxydes, éthoxydes, nitrites, carbonates et bicarbonates de métaux des groupes I, II, III et VIII du Tableau Périodique des Eléments, notamment Na, K, Li, Mg, Ca, Cd, Zn, Ba, Al, Fe.

La quantité de l'additif réactif ou des additifs réactifs, que l'on incorpore au milieu réactionnel donnant naissance aux compositions bitume/polymère, peut aller de 0,01 % à 10 % et plus particulièrement de 0,05 % à 5 % du poids de bitume présent dans ledit milieu réactionnel.

Outre les additifs réactifs et l'agent de fluxage, on peut encore incorporer aux compositions bitume/polymère, à un moment quelconque de leur constitution, des additifs conventionnellement utilisés dans les compositions bitume/polymère tels que promoteurs d'adhésion de la composition bitume/polymère aux surfaces minérales ou encore des charges comme le talc, le noir de carbone, les pneus usagés réduits en poudrette.

Lorsque la composition bitume/polymère renferme un agent fluxant consistant en une huile hydrocarbonée telle que définie plus haut, on peut produire ladite composition bitume/polymère en incorporant le polymère oléfinique porteur de groupements époxy ou COOH et le polymère primaire au bitume ou mélange de bitumes sous la forme d'une solution mère de ces polymères dans l'huile hydrocarbonée constituant l'agent fluxant.

La solution mère est préparée par mise en contact des ingrédients la composant, à savoir huile hydrocarbonée servant de solvant, polymère oléfinique à groupements époxy ou COOH ou/et polymère primaire et, le cas échéant additif réactif, à des températures comprises entre 10°C et 170°C et plus particulièrement entre 40°C et 120°C et sous agitation, pendant une durée suffisante, par exemple comprise entre 10 minutes et 2 heures, pour obtenir une dissolution complète des ingrédients dans l'huile hydrocarbonée.

Les concentrations respectives des divers ingrédients, notamment polymère oléfinique à groupements époxy ou COOH, polymère primaire et, le cas échéant, additif réactif dans la solution mère peuvent varier assez largement en fonction, notamment, de la nature de l'huile hydrocarbonée utilisée pour dissoudre lesdits ingrédients. Ainsi, les quantités respectives de polymère oléfinique fonctionalisé et de polymère primaire peuvent représenter avantageusement 1 % à 20 % et 5 % à 30 % en poids de l'huile hydrocarbonée.

Pour préparer les compositions bitume/polymère en faisant appel à la technique de la solution mère, on mélange la solution mère renfermant le polymère oléfinique fonctionnalisé et le polymère primaire et, le cas échéant les additifs réactifs avec le bitume ou mélange de bitumes, en opérant à des températures comprises entre 100°C et 230°C, plus particulièrement entre 120°C et 190°C, et sous agitation, ceci étant réalisé, par exemple, en incorporant la solution mère au bitume ou mélange de bitumes maintenu sous agitation aux températures entre 100°C et 230°C et plus particulièrement entre 120°C et 190°C, puis on maintient le mélange résultant sous agitation à des températures comprises entre 100°C et 230°C, plus particulièrement entre 100°C et 190°C, par exemple aux températures utilisées pour réaliser le mélange de la solution mère avec le bitume, pendant une durée au moins égale à 10 minutes, et généralement allant de 10 minutes à 2 heures, pour former un produit de réaction constituant la composition bitume/polymère.

La quantité de solution mère mélangée au bitume ou mélange de bitumes est choisie pour fournir les quantités désirées, par rapport au bitume, de polymère oléfinique à groupements époxy ou COOH et de polymère primaire, lesdites quantités étant dans les fourchettes définies précédemment.

Les compositions bitume/polymère à stabilité améliorée selon l'invention peuvent être utilisées telles quelles ou bien diluées avec des proportions variables d'un bitume ou mélange de bitumes ou d'une composition selon l'invention ayant des caractéristiques différentes pour constituer des liants bitume/polymère ayant une teneur choisie en polymères, qui peut être soit égale (composition non diluée) ou bien inférieure (composition diluée) à la teneur en polymères des compositions bitume/polymère initiales correspondantes. La dilution des compositions bitume/polymère selon l'invention avec le bitume ou mélange de bitumes ou avec une composition selon l'invention de caractéristiques différentes peut être réalisée soit directement à la suite de l'obtention desdites compositions, lorsqu'une utilisation quasi immédiate des liants bitume/polymère résultants est requise, ou bien encore après une durée de stockage plus ou moins prolongée des compositions bitume/polymère, lorsqu'une utilisation différée des liants bitume/polymère résultants est envisagée. Le bitume ou mélange de bitumes utilisé pour la dilution d'une composition bitume/polymère selon l'invention peut être choisi parmi les bitumes définis précédemment, comme convenant à la préparation des compositions bitume/polymère.

La dilution d'une composition bitume/polymère par un bitume ou mélange de bitumes ou par une seconde composition selon l'invention à teneur plus faible en polymères, pour former un liant bitume/polymère à teneur choisie en polymères inférieure à celle de la composition bitume/polymère à diluer, est généralement réalisée en mettant en contact, sous agitation et à des températures comprises entre 100°C et 230°C et plus particulièrement entre 120°C et 190°C, des proportions convenables de la composition bitume/polymère à diluer et de bitume ou mélange de bitumes ou de seconde composition bitume/polymère selon l'invention.

Les liants bitume/polymère consistant en les compositions bitume/polymère selon l'invention ou résultant de la dilution desdites compositions par un bitume ou mélange de bitumes ou par une autre composition bitume/polymère selon l'invention, jusqu'à la teneur désirée en polymère(s) dans lesdits liants, sont applicables, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

L'invention est illustrée par les exemples suivants donnés à titre non limitatif.

Dans ces exemples, les quantités et pourcentages sont exprimés en poids sauf indication contraire.

En outre, les caractéristiques rhéologiques et mécaniques des bitumes ou des compositions bitume/polymère auxquelles on fait référence dans lesdits exemples, à savoir pénétrabilité et point de ramollissement Bille et Anneau, sont celles définies précédemment.

### EXEMPLES 1 A 6 :

On préparait des compositions bitume/polymère témoins (exemples 1, 2 et 3), ainsi que des compositions bitume/polymère selon l'invention (exemples 4, 5 et 6), pour en évaluer et comparer les caractéristiques physicomécaniques.

On opérait dans les conditions suivantes :

### Exemple 1 (témoin) :

Dans un réacteur maintenu à 175°C et sous agitation, on introduisait 965 parties d'un bitume ayant une pénétrabilité, déterminée selon les modalités de la norme NF T 66004, dans l'intervalle 50/70, ainsi que 35 parties d'un copolymère statistique éthylène/acétate de vinyle renfermant 18 % d'acétate de vinyle et possédant un indice de fluidité, déterminé selon la norme ASTM D 1238, ayant une valeur égale à 150 g par 10 minutes. Le contenu du réacteur était ensuite maintenu à 175°C, sous agitation, pendant une durée de 2,5 heures pour produire la composition bitume/polymère.

### Exemple 2 (témoin) :

On opérait comme décrit dans l'exemple 1, en remplaçant toutefois le copolymère éthylène/acétate de vinyle par 20 parties d'un polynorbornène de masse moléculaire supérieure à 2×10⁶ (polynorbornène NORSOREX d'ELF ATOCHEM) et en utilisant 980 parties de bitume.

### Exemple 3 (témoin) :

On opérait comme décrit dans l'exemple 1, en remplaçant toutefois le copolymère éthylène/acétate de vinyle par un polyéthylène basse densité possédant un indice de fluidité, déterminé comme indiqué dans l'exemple 1, ayant une valeur égale à 1,2 g par 10 minutes.

### Exemple 4 (selon l'invention) :

Dans un réacteur maintenu à 175°C et sous agitation, on introduisait 950 parties du bitume utilisé dans l'exemple 1, ainsi que 35 parties du copolymère éthylène/acétate de vinyle utilisé dans l'exemple 1 et 15 parties d'un terpolymère éthylène/acrylate de méthyle/méthacrylate de glycidyle renfermant 24 % d'acrylate de méthyle et 8 % de méthacrylate de glycidyle et possédant un indice de fluidité (norme ASTM D 1238) ayant une valeur égale à 6 g par 10 minutes. Le contenu du réacteur était ensuite maintenu à 175°C, sous agitation, pendant une durée de 2,5 heures pour former la composition bitume/polymère selon l'invention.

### Exemple 5 (selon l'invention) :

On opérait comme décrit dans l'exemple 4, en remplaçant toutefois le copolymère éthylène/acétate de vinyle par 20 parties du polynorbornène employé dans l'exemple 2 et en utilisant 972,5 parties de bitume et 7,5 parties du terpolymère éthylène/acrylate de méthyle/méthacrylate de glycidyle.

### Exemple 6 (selon l'invention) :

On opérait comme décrit dans l'exemple 4, en remplaçant toutefois le copolymère éthylène/acétate de vinyle par le polyéthylène basse densité utilisé dans l'exemple 3.

Pour chacune des compositions obtenues comme indiqué dans les exemples 1 à 6, on a déterminé la pénétrabilité à 25°C (Pen) et la température de ramollissement Bille et Anneau (TBA).

En outre, un essai de stabilité au stockage à 180°C pendant 3 jours a été réalisé sur chacune des compositions bitume/polymère obtenue. Cet essai consiste à remplir un tube en aluminium, type "tube dentifrice", au moyen de la composition à étudier et à maintenir le tube renfermant la composition à la température de 180°C pendant la durée choisie pour le stockage, à savoir 3 jours. A la fin de ladite durée, le tube est refroidi, puis il est coupé en trois parties ayant sensiblement même longueur. On détermine alors la pénétration à 25°C et la température de ramollissement de la composition dans chacune des parties haute (tiers supérieur) et basse (tiers inférieur) du tube. La différence (Delta X) entre les valeurs de la caractéristique X dans la partie haute et la partie basse du tube donne une indication de la stabilité de la composition bitume/polymère. La composition est d'autant plus stable que la différence "Delta X" est plus faible.

Les résultats obtenus sont rassemblés dans le tableau ci-après.

Dans ce tableau, les sigles BT, EVA, PNB, PEBD et TPO ont les significations suivantes :
- BT : bitume non modifié de pénétrabilité dans l'intervalle 50/70 utilisé dans les divers exemples ;
- EVA : copolymère statistique éthylène/acétate de vinyle utilisé dans les exemples 1 et 4 ;
- PNB : polynorbornène utilisé dans les exemples 2 et 5 ;
- PEBD : polyéthylène basse densité utilisé dans les exemples 3 et 6 ;
- TPO : terpolymère éthylène/acrylate de méthyle/méthacrylate de glycidyle utilisé dans les exemples 4, 5 et 6.

Les teneurs des compositions en EVA, PNB, PEBD et TPO sont exprimées en pourcentages pondéraux des quantités globales de bitume et polymère(s).

**Tableau**

| Exemples | BT | 1 | 2 | 3 | 4 | 5 | 6 |
|---|---|---|---|---|---|---|---|
| EVA (%) | | 3,5 | | | 3,5 | | |
| PNB (%) | | | 2 | | | 2 | |
| PEBD (%) | | | | 3,5 | | | 3,5 |
| TPO (%) | | | | | 1,5 | 0,75 | 1,5 |
| Pen (1/10 mm) | 68 | 48 | 45 | 50 | 54 | 50 | 53 |
| TBA (°C) | 49 | 56 | 62 | 59 | 59 | 70 | 63 |

| STOCKAGE A 180°C PENDANT 3 JOURS | | | | | | | |
|---|---|---|---|---|---|---|---|
| Pen Haut (1/10 mm) | 68 | 83 | 70 | 100 | 54 | 52 | 52 |
| Pen Bas (1/10 mm) | 68 | 42 | 30 | 30 | 53 | 50 | 50 |
| Delta Pen (1/10 mm) | 0 | 41 | 40 | 70 | 1 | 2 | 2 |
| TBA Haut (°C) | 49 | 59 | 65 | 62 | 57 | 71 | 63 |
| TBA Bas (°C) | 49 | 55 | 56 | 50 | 58 | 69 | 61 |
| Delta TBA (°C) | 0 | 4 | 9 | 12 | -1 | 2 | 2 |

Au vu des résultats présentés dans le tableau, il apparaît que :
- le bitume de base est stable comme attendu ;
- les compositions bitume/polymère à base d'un bitume et d'un polymère primaire sont toutes instables au stockage (exemples 1 à 3), la composition bitume/polymère renfermant du polyéthylène (exemple 3) étant la plus instable.
- les compositions bitume/polymère selon l'invention à base d'un bitume, d'un polymère primaire et d'un polymère oléfinique fonctionnalisé, ici par des groupements époxy (exemples 4 à 6) sont notablement plus stables que les compositions bitume/polymère témoins (exemples 1 à 3).

## Revendications

1. Compositions bitume/polymère, à stabilité améliorée, comportant un bitume ou mélange de bitumes et, comptés en poids du bitume ou mélange de bitumes, 0,3 % à 20 % d'au moins un polymère primaire choisi dans le groupe formé par les homopolymères de diènes conjugués, les copolymères de diènes conjugués entre eux, les polynorbornènes, les polyisobutylènes, le caoutchouc butyle, les homopolymères d'oléfines en C₂ à C₄, les copolymères d'éthylène et de propylène, les terpolymères d'éthylène, de propylène et d'un diène ou d'une alpha-oléfine en C₄ à C₁₂ et les copolymères d'éthylène et d'au moins un monomère A de formule 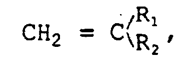 où R₁ désigne H, CH₃ ou C₂H₅ et R₂ représente un radical -COOR₅, -OR₅, -OOCR₆ ou phényle avec R₅ désignant un alkyle en C₁ à C₁₀ et R₆ représentant H ou un alkyle en C₁ à C₃, lesdites compositions **se caractérisant en ce qu'**elles renferment en outre, comptés en poids du bitume ou mélange de bitumes, 0,01 % à 12 % d'un polymère oléfinique à groupements fonctionnels époxy ou COOH choisis parmi les copolymères renfermant, en poids, x % de motifs issus de l'éthylène ou du propylène, y % de motifs issus d'un ou plusieurs monomères A précités, z% de motifs issus d'au moins un monomère B de formule 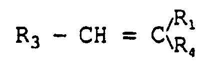 et v % de motifs issus d'un ou plusieurs monomères C différents des monomères A et B, avec R1 ayant la signification précitée, R₃ représentant H, -COOH ou -COOR₅, R₄ étant un radical -COOH, 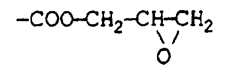 ou 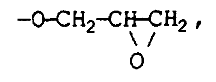 R₅ étant un radical alkyle en C₁ à C₁₀ et x, y, z et v représentant des nombres tels que 40 ≤ x ≤ 99,9, 0 ≤ y ≤ 50, 0,1 ≤ z ≤ 20, 0 ≤ v ≤ 15 avec x+y+z+v = 100 , à l'exclusion des compositions bitume/polymère ci-dessus, qui referment, en poids du bitume ou mélange de bitumes, soit (i) 0,1% à 10% de copolymère oléfinique à groupements époxy et, simultanément, comme polymères primaires, 0,1% à 10% d'un copolymère d'éthylène et d'un monomère de formule 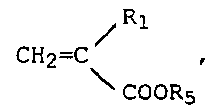 R₁ et R₅ ayant la signification donnée plus haut, 0% à 10% d'un élastomère thermoplastique D et 0% à 10% d'un copolymère EVA ou bien (ii) 0,5% à 4% de copolymère oléfinique à groupements époxy et, à titre de polymères primaires utilisés conjointement, 2% à 6% d'un élastomère thermoplastique D et 0,5% à 5% d'un copolymère EVA, l'élastomère D étant choisi parmi les polybutènes, les polybutadiènes, les polyisoprènes, les copolymères éthylène/propylène, les copolymères éthylène/ butène et les copolymères éthylène/diènes.

2. Compositions selon la revendication 1, **caractérisées en ce que** leur teneur en polymère primaire représente 0,5 % à 10 % du poids de bitume ou mélange de bitumes.

3. Compositions selon la revendication 1 ou 2, **caractérisées en ce que** leur teneur en polymère oléfinique à groupements fonctionnels époxy ou COOH représente 0,1 % à 5 % du poids de bitume ou mélange de bitumes.

4. Compositions selon l'une des revendications 1 à 3, **caractérisées en ce que**, dans le polymère oléfinique à groupements époxy ou COOH, les teneurs x, y, z et v sont telles que 50 ≤ x ≤ 99,5, 0 ≤ y ≤ 40, 0,5 ≤ z ≤ 15 et 0 ≤ v ≤ 10 avec x+y+z+v = 100.

5. Compositions selon l'une des revendications 1 à 4, **caractérisées en ce que** les monomères A sont choisis parmi le formiate de vinyle, l'acétate de vinyle, le propionate de vinyle, le butyrate de vinyle, les éthers de vinyle CH₂ = CH-O-R₅, les acrylates d'alkyle de formule CH₂ = CH -COOR₅ et les méthacrylates d'alkyle de formule 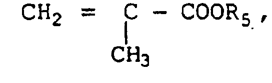 R₅ étant un radical alkyle en C₁ à C₁₀ et de préférence en C₁ à C₆, notamment méthyle, éthyle, propyle, butyle.

6. Compositions selon l'une des revendications 1 à 5, **caractérisées en ce que** les monomères B sont choisis parmi l'acide maléique et son anhydride, l'acide acrylique, l'acide méthacrylique, les maléates acides d'alkyle de formule HOOC-CH=CH-COOR₇ où R₇ est un radical alkyle en C₁ à C₆, l'acrylate de glycidyle, le méthacrylate de glycidyle et le vinyléther de glycidyle.

7. Compositions selon l'une des revendications 1 à 6, **caractérisées en ce que** les monomères C sont choisis parmi CO, SO₂ et acrylonitrile.

8. Compositions selon l'une des revendications 1 à 7, **caractérisées en ce que** les polymères oléfiniques à groupements époxy ou COOH sont choisis dans le groupe consistant en :
(a) les copolymères statistiques d'éthylène et d'un monomère B choisi parmi l'acide acrylique, l'acide méthacrylique, l'acide maléique ou son anhydride, l'acrylate de glycidyle et le méthacrylate de glycidyle, qui renferment, en poids, 80 % à 99,7 % et de préférence 85 % à 99,5 % d'éthylène ;
(b) les terpolymères statistiques d'éthylène, d'un monomère A choisi parmi l'acétate de vinyle et les acrylates ou méthacrylates d'alkyle à reste alkyle en C₁ à C₆ tel que méthyle, éthyle, propyle, butyle, hexyle, et d'un monomère B choisi parmi l'acide acrylique, l'acide méthacrylique, l'acide maléique ou son anhydride, l'acrylate de glycidyle et le méthacrylate de glycidyle, qui renferment, en poids, 0,5 % à 40 % de motifs issus du monomère A et 0,5 % à 15 % de motifs issus du monomère B, le reste étant formé de motifs issus de l'éthylène ; et
(c) les copolymères résultant du greffage d'un monomère B choisi parmi l'acide acrylique, l'acide méthacrylique, l'acide maléique ou son anhydride, l'acrylate de glycidyle et le méthacrylate de glycidyle, sur un substrat consistant en un polymère choisi parmi les polyéthylènes, notamment polyéthylènes basse densité, les polypropylènes et les copolymères statistiques d'éthylène et d'acétate de vinyle ou d'éthylène et d'acrylate ou de méthacrylate d'alkyle à reste alkyle en C₁ à C₆ tel que méthyle, éthyle, propyle, butyle, hexyle, qui renferment, en poids, 40 % à 99,7 % et de préférence 50 % à 99 % d'éthylène, lesdits copolymères greffés renfermant, en poids, 0,5 % à 15 % de motifs greffés issus du monomère B.

9. Compositions selon la revendication 8, **caractérisées en ce que** les polymères oléfiniques à groupements époxy ou COOH sont choisis parmi :
(i) les terpolymères statistiques d'éthylène, d'acrylate ou méthacrylate d'alkyle à reste alkyle en C₁ à C₆ tel que méthyle, éthyle, butyle, et d'anhydride maléique, qui renferment, en poids, 0,5 % à 40 % de motifs issus d'acrylate ou méthacrylate d'alkyle et 0,5 % à 15 % de motifs issus de l'anhydride maléique, le reste étant formé de motifs issus de l'éthylène ;
(ii) les terpolymères statistiques d'éthylène, d'acrylate ou méthacrylate d'alkyle à reste alkyle en C₁ à C₆ tel que méthyle, éthyle, butyle, et d'acrylate ou méthacrylate de glycidyle, qui renferment, en poids, 0,5 % à 40 % de motifs issus d'acrylate ou méthacrylate d'alkyle et 0,5 à 15 % de motifs issus d'acrylate ou méthacrylate de glycidyle, le reste étant formé de motifs issus de l'éthylène ;
(iii) les polyéthylènes basse densité greffés anhydride maléique et les polypropylènes greffés anhydride maléique, qui renferment, en poids, 0,5 % à 15 % de motifs greffés issus de l'anhydride maléique ; et
(iv) les polyéthylènes basse densité greffés acrylate ou méthacrylate de glycidyle et les polypropylènes greffés acrylate ou méthacrylate de glycidyle, qui renferment, en poids, 0,5 % à 15 % de motifs greffés issus du dérivé glycidyle.

10. Compositions selon l'une des revendications 1 à 9, **caractérisées en ce que** les polymères oléfiniques à groupements époxy ou COOH possèdent un indice de fluidité, déterminé selon la norme ASTM D 1238, ayant une valeur, exprimée en grammes par 10 minutes, comprise entre 0,3 et 3000 et de préférence entre 0,5 et 900.

11. Compositions selon l'une des revendications 1 à 10, **caractérisées en ce que** le bitume ou mélange de bitumes est choisi parmi les bitumes ayant une viscosité cinématique à 100°C comprise entre 0,5x10⁻⁴ m²/s et 3x10⁻² m²/s et de préférence entre 1x10⁻⁴ m²/s et 2x10⁻² m²/s.

12. Compositions selon la revendication 11, **caractérisées en ce que** le bitume ou mélange de bitumes présente une pénétrabilité à 25°C, définie selon la norme NF T 66004, comprise entre 5 et 800 et de préférence entre 10 et 400.

13. Compositions selon l'une des revendications 1 à 12, **caractérisées en ce que** le polymère primaire est choisi parmi polybutadiène, polyisoprène, polychloroprène, copolymères butadiène/isoprène, polynorbornène, polyisobutylène, caoutchouc butyle, polyéthylène haute densité, polyéthylène basse densité, polypropylène, polybutène, copolymères statistiques éthylène/propylène (EP), terpolymères statistiques éthylène/propylène/diène (EPDM), copolymères éthylène/acétate de vinyle (EVA), copolymères éthylène/acrylate d'un alkyle en C₁ à C₆, notamment copolymères éthylène/acrylate de méthyle.et copolymères éthylène/acrylate de butyle, et copolymères éthylène/méthacrylate d'un alkyle en C₁ à C₆, notamment copolymères éthylène/méthacrylate d'éthyle et copolymères éthylène/méthacrylate de butyle, copolymères éthylène/styrène et copolymères éthylène/butène/styrène.

14. Compositions selon l'une des revendications 1 à 13, **caractérisées en ce qu'**elles sont obtenues en mettant en contact le ou les polymères primaires et le ou les polymères oléfiniques à groupements époxy ou COOH avec le bitume ou mélange de bitumes, dans les proportions choisies, en opérant à des températures comprises entre 100°C et 230°C, plus particulièrement entre 120°C et 190°C, et sous agitation, pendant une durée d'au moins 10 minutes, en particulier de 10 minutes à 8 heures et plus particulièrement de 10 minutes à 5 heures, pour former une masse homogène constituant la composition bitume/polymère.

15. Compositions selon l'une des revendications 1 à 14, **caractérisées en ce qu'**elles renferment, en outre, 1 % à 40 % et plus particulièrement 2 % à 30 %, en poids du bitume ou mélange de bitumes, d'un agent fluxant.

16. Compositions selon la revendication 15, **caractérisées en ce que** l'agent fluxant consiste en une huile hydrocarbonée présentant un intervalle de distillation à pression atmosphérique, déterminé selon la norme ASTM D 86-67, compris entre 100°C et 600°C et situé plus spécialement entre 150°C et 400°C.

17. Compositions selon la revendication 16, **caractérisées en ce que** l'huile hydrocarboné est choisie parmi les coupes pétrolières de caractère aromatique, les coupes pétrolières de caractère naphténo-aromatique, les coupes pétrolières de caractère naphténo-paraffinique, les coupes pétrolières de caractère paraffinique, les huiles de houille et les huiles d'origine végétale.

18. Compositions selon la revendication 16 ou 17, **caractérisées en ce qu'**elles sont obtenues en incorporant le polymère oléfinique à groupements époxy ou COOH et le polymère primaire au bitume ou mélange de bitumes sous la forme d'une solution mère de ces polymères dans l'huile hydrocarbonée constituant l'agent fluxant.

19. Compositions selon la revendication 18, **caractérisées en ce que** la solution mère renferme, en poids de l'huile hydrocarbonée, 1 % à 20 % de polymère oléfinique à groupements époxy ou COOH et 5 % à 30 % de polymère primaire.

20. Compositions selon la revendication 18 ou 19, **caractérisées en ce qu'**elles sont obtenues en mélangeant la solution mère avec le bitume ou mélange de bitumes, en opérant à des températures comprises entre 100°C et 230°C, plus particulièrement entre 120°C et 190°C, et sous agitation, puis en maintenant le mélange résultant sous agitation à des températures comprises entre 100°C et 230°C, plus particulièrement entre 120°C et 190°C, pendant une durée au moins égale à 10 minutes, en particulier allant de 10 minutes à 2 heures, pour former un produit de réaction constituant la composition bitume/polymère.

21. Compositions selon l'une des revendications 1 à 20, **caractérisées en ce qu'**elles renferment un ou plusieurs additifs non polymères susceptibles de réagir avec les groupements époxy ou COOH du polymère oléfinique portant lesdits groupements, lesdits additifs réactifs étant en particulier des amines, notamment polyamines, primaires ou secondaires, des alcools, notamment polyols, des acides, notamment polyacides, ou encore des sels métalliques, notamment composés de métaux des groupes I, II, III et VIII du Tableau Périodique des Eléments.

22. Compositions selon la revendication 21, **caractérisées en ce que** la quantité d'additif réactif ou d'additifs réactifs qu'elles renferment, représente 0,01 % à 10 % et de préférence 0,05 % à 5 % du poids du bitume.

23. Application des compositions bitume/polymère selon l'une des revendications 1 à 22, à la production de liants bitume/polymère, lesdits liants consistant en lesdites compositions utilisées telles quelles ou bien étant formés par dilution desdites compositions bitume/polymère par un bitume ou mélange de bitumes ou par une composition bitume/polymère selon l'une des revendications 1 à 22 à teneurs plus faibles en polymère primaire et en polymère oléfinique à groupements époxy ou COOH, lesquels liants bitume/polymère sont notamment utilisables, directement ou après mise en émulsion aqueuse, à la réalisation de revêtements, notamment revêtements routiers du type enduit superficiel, à la production d'enrobés mis en place à chaud ou à froid, ou encore à la réalisation de revêtements d'étanchéité.

## Claims

1. Bitumen/polymer compositions, with improved stability, comprising a bitumen or mixture of bitumens and, by weight of the bitumen or mixture of bitumens, 0.3% to 20% of at least one primary polymer selected from the group consisting of conjugated diene homopolymers, mutually conjugated diene copolymers, polynorbornenes, polyisobutylenes, butyl rubber, C₂ to C₄ olefin homopolymers, ethylene and propylene copolymers, ethylene, propylene, diene or C₄ to C₁₂ alpha-olefin terpolymers, copolymers of ethylene and of at least one monomer A having the formula 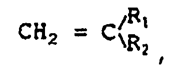 wherein R₁ denotes H, CH₃ or C₂H₅ and R₂ represents a -COOR₅, -OR₅, -OOCR₆ or phenyl radical, wherein R₅ denotes a C₁ to C₁₀ alkyl and R₆ represents H or a C₁ to C₃ alkyl, said compositions being **characterised in that** they also contain, by weight of the bitumen or mixture of bitumens, 0.01% to 12% of an olefin polymer with epoxy or COOH functional groups selected from copolymers containing x% by weight of units resulting from ethylene or propylene, y% by weight of units resulting from one or more of the aforementioned monomers A, z% by weight of units resulting from at least one monomer B having the formula 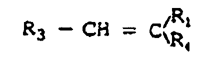 and v% by weight of units resulting from one or more monomers C, different from monomers A and B, with R₁ having the aforementioned meaning, R₃ representing H, -COOH or -COOR₅, R₄ being a -COOH, 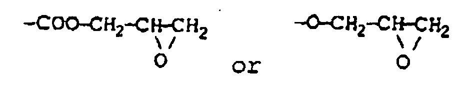 radical, R₅ being a C₁ to C₁₀ alkyl radical and x, y, z and v representing numbers such that 40 ≤ x ≤ 99.9, 0 ≤ y ≤ 50, 0.1 ≤ z ≤ 20, 0 ≤ v ≤ 15, wherein x + y + z + v = 100, excluding the above bitumen/polymer compositions, which contain, by weight of the bitumen or mixture of bitumens, either (i) 0.1% to 10% of olefin copolymer with epoxy groups and, at the same time, as primary polymers, 0.1% to 10% of an ethylene copolymer and a monomer having the formula 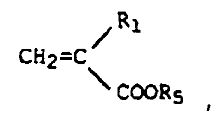 R₁ and R₅ having the meaning given above, 0% to 10% of a thermoplastic elastomer D and 0% to 10% of an EVA copolymer, or alternatively (ii) 0.5% to 4% of olefin copolymer with epoxy groups and, by way of conjointly used primary polymers, 2% to 6% of a thermoplastic elastomer D and 0.5% to 5% of an EVA copolymer, the elastomer D being selected from polybutenes, polybutadienes, polyisoprenes, ethylene/propylene copolymers, ethylene/butene copolymers and ethylene/diene copolymers.

2. Compositions according to claim 1, **characterised in that** their primary polymer content represents 0.5% to 10% of the weight of the bitumen or mixture of bitumens.

3. Compositions according to either of claims 1 or 2, **characterised in that** their content of olefin polymer with epoxy or COOH functional groups represents 0.1% to 5% of the weight of the bitumen or mixture of bitumens.

4. Compositions according to any of claims 1 to 3, **characterised in that**, in the olefin polymer with epoxy or COOH groups, the contents x, y, z and v are such that 50 ≤ x ≤ 99.5, 0 ≤ y ≤ 40, 0.5 ≤ z ≤ 15, 0 ≤ v ≤ 10 wherein x + y + z + v = 100.

5. Compositions according to any of claims 1 to 4, **characterised in that** the monomers A are selected from vinyl formiate, vinyl acetate, vinyl propionate, vinyl butyrate, CH₂ = CH-O-R₅ vinyl ethers, alkyl acrylates having the formula CH₂ = CH-COOR₅ and alkyl methacrylates having the formula 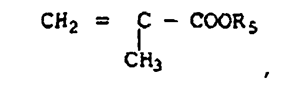 R₅ being a C₁ to C₁₀ and preferably a C₁ to C₆, alkyl radical, especially methyl, ethyl, propyl and butyl.

6. Compositions according to any of claims 1 to 5, **characterised in that** the monomers B are selected from maleic acid and the anhydride thereof, acrylic acid, methacrylic acid, alkyl acid maleates having the formula HOOC-CH=CH-COOR₇, where R₇ is a C₁ to C₆ alkyl radical, glycidyl acrylate, glycidyl methacrylate and glycidyl vinylether.

7. Compositions according to any of claims 1 to 6, **characterised in that** the monomers C are selected from CO, SO₂ and acrylonitrile.

8. Compositions according to any of claims 1 to 7, **characterised in that** the olefin polymers with epoxy or COOH groups are selected from the group consisting of:
(a) random copolymers of ethylene and of a monomer B selected from acrylic acid, methacrylic acid, maleic acid or the anhydride thereof, glycidyl acrylate and glycidyl methacrylate, which contain 80% to 99.7% by weight and preferably 85% to 99.5% by weight of ethylene;
(b) random terpolymers of ethylene, of a monomer A selected from vinyl acetate and alkyl acrylates or methacrylates with a C₁ to C₆ alkyl radical, such as methyl, ethyl, propyl, butyl and hexyl and of a monomer B selected from acrylic acid, methacrylic acid, maleic acid or the anhydride thereof, glycidyl acrylate and glycidyl methacrylate, which contain 0.5% to 40% by weight of units resulting from the monomer A and 0.5% to 15% by weight of units resulting from the monomer B, the remainder being formed from units resulting from ethylene; and
(c) copolymers resulting from the grafting of a monomer B selected from acrylic acid, methacrylic acid, maleic acid or the anhydride thereof, glycidyl acrylate and glycidyl methacrylate, on a substratum consisting of a polymer selected from polyethylenes, especially low-density polyethylenes, polypropylenes and random copolymers of ethylene and vinyl acetate, or of ethylene and acrylate, or of alkyl methacrylate with a C₁ to C₆ alkyl radical, such as methyl, ethyl, propyl, butyl and hexyl, which contain 40% to 99.7% by weight and preferably 50% to 99% by weight of ethylene, said grafted copolymers containing 0.5% to 15% by weight of grafted units resulting from the monomer B.

9. Compositions according to claim 8, **characterised in that** the olefin polymers with epoxy or COOH groups are selected from:
(i) random terpolymers of ethylene, of alkyl acrylate or methacrylate with a C₁ to C₆ alkyl radical, such as methyl, ethyl, butyl and maleic anhydride, which contain 0.5% to 40% by weight of units resulting from alkyl acrylate or methacrylate and 0.5% to 15% by weight of units resulting from maleic anhydride, the remainder being formed from units resulting from ethylene;
(ii) random terpolymers of ethylene, of alkyl acrylate or methacrylate with a C₁ to C₆ alkyl radical, such as methyl, ethyl, butyl and glycidyl acrylate or methacrylate, which contain 0.5% to 40% by weight of units resulting from alkyl acrylate or methacrylate and 0.5% to 15% by weight of units resulting from glycidyl acrylate or methacrylate, the remainder being formed from units resulting from ethylene;
(iii) low-density polyethylenes grafted with maleic anhydride and polypropylenes grafted with maleic anhydride, which contain 0.5% to 15% by weight of grafted units resulting from maleic anhydride; and
(iv) low-density polyethylenes grafted with glycidyl acrylate or methacrylate and polypropylenes grafted with glycidyl acrylate or methacrylate, which contain 0.5% to 15% by weight of grafted units resulting from the glycidyl derivative.

10. Compositions according to any of claims 1 to 9, **characterised in that** the olefin copolymers with epoxy or COOH groups have a melt flow index, determined according to ASTM Standard D 1238, having a value, expressed in grammes per 10 minutes, of between 0.3 and 3000 and preferably between 0.5 and 900.

11. Compositions according to any of claims 1 to 10, **characterised in that** the bitumen or mixture of bitumens is selected from bitumens having a kinematic viscosity at 100 °C of between 0.5 x 10⁻⁴ m²/s and 3 x 10⁻² m²/s and preferably between 1 x 10⁻⁴ m²/s and 2 x 10⁻² m²/s.

12. Compositions according to claim 11, **characterised in that** the bitumen or mixture of bitumens has a penetrability at 25 °C, defined according to NF Standard T 66004, of between 5 and 800 and preferably between 10 and 400.

13. Compositions according to any of claims 1 to 12, **characterised in that** the primary polymer is selected from polybutadiene, polyisoprene, polychloroprene, butadiene/isoprene copolymers, polynorbornene, polyisobutylene, butyl rubber, high-density polyethylene, low-density polyethylene, polypropylene, polybutene, random ethylene/propylene (EP) copolymers, random ethylene/propylene/diene (EPD) terpolymers, ethylene/vinyl acetate (EVA) copolymers, ethylene/acrylate copolymers of a C₁ to C₆ alkyl, especially ethylene/methyl acrylate copolymers and ethylene/butyl acrylate copolymers and ethylene/methacrylate copolymers of a C₁ to C₆ alkyl, especially ethylene/ethyl methacrylate copolymers and ethylene/butyl methacrylate copolymers, ethylene/styrene copolymers and ethylene/butene/styrene copolymers.

14. Compositions according to any of claims 1 to 13, **characterised in that** they are obtained by bringing the primary polymer or polymers and the olefin polymer or polymers with epoxy or COOH groups into contact with the bitumen or mixture of bitumens, in the chosen proportions, the process being carried out at temperatures of between 100 °C and 230 °C, more particularly between 120 °C and 190 °C, while stirring, for a period of at least 10 minutes, in particular from 10 minutes to 8 hours and more particularly from 10 minutes to 5 hours, to form a homogeneous mass constituting the bitumen/polymer composition.

15. Compositions according to any of claims 1 to 14, **characterised in that** they also contain 1% to 40% and more particularly 2% to 30%, by weight of the bitumen or mixture of bitumens, of a fluxing agent.

16. Compositions according to claim 15, **characterised in that** the fluxing agent consists of a hydrocarbon oil having an atmospheric pressure distillation range, determined according to ASTM Standard D 86-67, of between 100 °C and 600 °C and located more particularly between 150 °C and 400 °C.

17. Compositions according to claim 16, **characterised in that** the hydrocarbon oil is selected from petroleum cuts of an aromatic nature, petroleum cuts of a naphthene-aromatic nature, petroleum cuts of a naphthene-paraffinic nature, petroleum cuts of a paraffinic nature, coal oils and oils of vegetable origin.

18. Compositions according to either of claims 16 or 17, **characterised in that** they are obtained by incorporating the olefin copolymer with epoxy or COOH groups and the primary polymer in the bitumen or mixture of bitumens, in the form of a mother liquor of these polymers in the hydrocarbon oil constituting the fluxing agent.

19. Compositions according to claim 18, **characterised in that** the mother liquor contains, by weight of the hydrocarbon oil, 1% to 20% of olefin polymer with epoxy or COOH groups and 5% to 30% of primary polymer.

20. Compositions according to either of claims 18 and 19, **characterised in that** they are obtained by mixing the mother liquor with the bitumen or mixture of bitumens, the process being carried out at temperatures of between 100 °C and 230 °C, more particularly between 120 °C and 190 °C, while stirring, the resulting mixture then being stirred continuously, at temperatures of between 100 °C and 230 °C, more particularly between 120 °C and 190 °C, for a period of to at least 10 minutes, in particular ranging from 10 minutes to 2 hours, to form a reaction product constituting the bitumen/polymer composition.

21. Compositions according to any of claims 1 to 20, **characterised in that** they contain one or more non-polymeric additives that are capable of reacting with the epoxy or COOH groups of the olefin polymer carrying said groups, said reactive additives being, in particular, amines, especially primary or secondary polyamines, alcohols, especially polyols, acids, especially polyacids, or alternatively metallic salts, especially compounds of metals from groups I, II, III and VIII of the Periodic Table.

22. Compositions according to claim 21, **characterised in that** the quantity of reactive additive or reactive additives that they contain represents 0.01% to 10% and preferably 0.05% to 5%, of the weight of the bitumen.

23. Application of the bitumen/polymer compositions according to any of claims 1 to 22 to the production of bitumen/polymer binders, said binders consisting of said compositions used as they are, or alternatively being formed by dilution of said bitumen/polymer compositions by a bitumen or mixture of bitumens, or by a bitumen/polymer composition according to any of claims 1 to 22, with lower contents of primary polymer and olefin polymer with epoxy or COOH groups, it being possible, in particular, to use said bitumen/polymer binders, directly or after being placed in an aqueous emulsion, to make coatings, especially coatings for road surfacing, to produce pre-mixes to be laid hot or cold, or alternatively to make impervious coatings.

## Patentansprüche

1. Bitumen/Polymer-Zusammensetzungen mit verbesserter Stabilität, enthaltend ein Bitumen oder ein Bitumengemisch und, berechnet auf das Gewicht des Bitumens oder des Bitumengemisches, 0,3% bis 20% mindestens eines primären Polymers, ausgewählt aus der Gruppe, die durch Homopolymere von konjugierten Dienen, durch Copolymere von konjugierten Dienen untereinander, durch Polynorborene, durch Polyisobutylene, durch Butylkautschuk, durch Homopolymere von C₂- bis C₄-Olefinen, durch Copolymere des Ethylens und des Propylens, durch Terpolymere des Ethylens, des Propylens und eines Diens oder eines C₄- bis C₅-α-Olefins und durch Copolymere des Ethylens und mindestens eines Monomers A der Formel 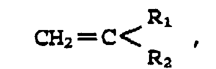 worin R₁ H, CH₃ oder C₂H₅ und R₂ einen Rest -COOR₅, -OR₅, -OOCR₆ oder Phenylen bedeuten, wobei R₅ eine C₁- bis C₁₀-A-lkylgruppe und R₆ H oder eine C₁- bis C₃-Alkylgruppe bedeuten, gebildet ist, wobei diese Zusammensetzungen **dadurch gekennzeichnet sind, dass** sie u.a., berechnet auf das Gewicht des Bitumens oder des Bitumengemisches, 0,01% bis 12% eines olefinischen Polymers mit funktionellen Epoxy- oder COOH-Gruppen enthalten, ausgewählt aus den Copolymeren, die bezogen auf das Gewicht, x % Bestandteile aus dem Ethylen oder dem Propylen, y % Bestandteile aus einem oder mehreren der vorstehenden Monomeren, z % Bestandteile aus mindestens einem Monomer B der Formel 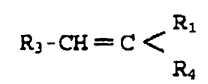 und v % Bestandteile aus einem oder mehreren Monomeren C enthalten, wobei sich die Monomeren C von den Monomeren A und B unterscheiden, wobei R₁ die vorstehend angegebene Bedeutung hat, R₃ H, -COOH oder -COOR₅ bedeutet, R₄ einen Rest -COOH, 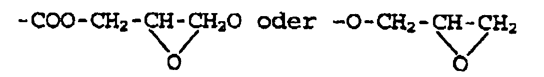 darstellt, R₅ einen C₁- bis C₁₀-Alkylrest und x, y, z und v die Zahlen 40 ≤ x ≤ 99,9, 0 ≤ y ≤ 50, 0,1 ≤ z ≤ 20, 0 ≤ v ≤ 15, wobei x + y + z + v = 100 bedeutet, unter Ausschluas der vorstehend angegebenen Bitumen/Polymer-Zusammensetzungen, die, bezogen auf das Gewicht des Bitumens oder des Bitumengemisches, entweder (i) 0,1% bis 10% olefinisches Copolymer mit Epoxygruppen und, gleichzeitig als primäre Polymere 0,1% bis 10% eines Copolymers des Ethylens und eines Monomers der Formel 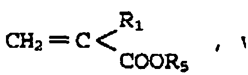 wobei R₁ und R₅ die vorstehend angegebene Bedeutung haben, 0% bis 10% eines thermoplastischen Elastomers D, und 0% bis 10% eines EVA-Copolymers oder (ii) 0,5% bis 4% eines olefinischen Copolymers mit Epoxygruppen, und gleichzeitig als primäre Polymere 2% bis 6% eines thermoplastischen Elastomers D, und 0,5% bis 5% eines EVA-Copolymers enthalten, wobei das Elastomer D aus Polybutenen, Polybutadienen, Polyisoprenen, Ethylen/Propylen-Copolymeren, Ethylen/Butadien-Copolymeren und Ethylen/Dien-Copolymeren ausgewählt ist.

2. Zusammensetzung nach Anspruch 1, **dadurch gekennzeichnet, dass** ihr Gehalt an primärem Polymer 0,5% bis 10% des Gewichtes des Bitumens oder des Bitumengemisches beträgt.

3. Zusammensetzung nach Anspruch 1 oder 2, **dadurch gekennzeichnet, dass** ihr Gehalt an olefinischen Polymeren mit funktionellen Epoxy- oder COOH-Gruppen 0,1% bis 5% des Gewichts des Bitumens oder des Bitumengemisches beträgt.

4. Zusammensetzungen nach einem der Ansprüche 1 bis 3,**dadurch gekennzeichnet, dass** in dem olefinischen Polymer mit den Epoxy- oder COOH-Gruppen die Mengen an x, y, z und v 50 ≤ x ≤ 99,5, 0 ≤ y ≤ 40, 0,5 ≤ z ≤ 15 und 0 ≤ v ≤ 10 betragen, wobei x + y + z + v = 100 beträgt.

5. Zusammensetzungen nach einem der Ansprüche 1 bis 4, **dadurch gekennzeichnet, dass** die Monomeren A aus Vinylformiat, vinylacetat, Vinylpropionat, Vinylbutyrat, aus Vinylethern CH₂ = CH-O-R₅, aus Alkylacrylaten der Formel CH₂ = CH-COOR₅ und aus Methalkylacrylaten der Formel 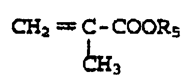 ausgewählt sind, wobei R₅ einen C₁- bis C₈-Alkylrest, vorzugsweise mit C₁ bis C₆, insbesondere Methyl, Ethyl, Propyl, Butyl darstellt.

6. Zusammensetzungen nach einem der Ansprüche 1 bis 5,**dadurch gekennzeichnet, dass** die Monomeren B aus Maleinsäure und seinem Anhydrid, Acrylsäure, Methacrylsäure, den sauren Alkylmaleaten der Formel HOOC-CH=CH-COOR₇, wobei R₇ ein C₁bis C₆-Alkylrest bedeutet, aus Glycidylacrylat, Glycidylmethacrylat und Glycidylvinylether, ausgewählt sind.

7. Zusammensetzungen nach einem der Ansprüche 1 bis 6, **dadurch gekennzeichnet, dass** die Monomeren C aus CO, SO₂ und Acrylnitril ausgewählt sind.

8. Zusammensetzungen nach einem der Ansprüche 1 bis 7, **dadurch gekennzeichnet, dass** die olefinischen Polymeren mit Epoxyund COOH-Gruppen aus den Gruppen ausgewählt sind, die bestehen aus:
(a) den statistischen Copolymeren des Ethylens und eines Monomers B, ausgewählt aus Acrylsäure, Methacrylsäure, Maleinsäure oder seinem Anhydrid, Glycidylacrylat und Glycidylmethacrylat, die 80 bis 99,7 Gew.-%, vorzugsweise 85 bis 99,5 Gew.-% Ethylen enthalten;
(b) den statistischen Terpolymeren des Ethylens, eines Monomers A, ausgewählt aus Vinylacetat und den Alkylacrylaten oder -methacrylaten mit C₁- bis C₆-Alkylresten, wie Methyl, Ethyl, Propyl, Butyl, Hexyl, und einem Monomer B, ausgewählt aus Acrylsäure, Methacrylsäure, Maleinsäure und seinem Anhydrid, Glycidylacrylat und Glycidylmethacrylat, die 0,5 bis 40 Gew.-% Bestandteile aus dem Monomer A und 0,5 bis 15 Gew.-% Bestandteile aus dem Monomer B enthalten, wobei der Rest aus Bestandteilen aus dem Ethylen gebildet ist; und
(c) den Copolymeren, die durch Pfropfen eines Monomers B, ausgewählt aus Acrylsäure, Methacrylsäure, Maleinsäure und seinem Anhydrid, Glycidylacrylat und Glycidylmethacrylat, auf einem Substrat, bestehend aus einem Polymer, welches ausgewählt ist aus Polyethylenen, insbesondere Polyethylenen mit niedriger Dichte, Polypropylenen und den statistischen Copolymeren des Ethylens und des Vinylacetats, oder des Ethylens und des Alkylacrylats oder -methacrylats mit C₁ bis C₆-Alkylresten, wie Methyl, Ethyl, Propyl, Butyl, Hexyl, die 40 bis 99,7 Gew.-%, vorzugsweise 50 bis 99 Gew.-% Ethylen enthalten, wobei die gepfropften Copolymere 0,5 bis 15 Gew.-% aufgepfropfte Bestandteile aus dem Monomer B enthalten.

9. Zusammensetzungen nach Anspruch 8, **dadurch gekennzeichnet, dass** die Olefinpolymere mit den Epoxy- oder COOH-Gruppen ausgewählt sind aus:
(i) den statistischen Terpolymeren des Ethylens, des Alkylacrylats oder -methacrylats mit C₁ bis C₆-Alkylresten, wie Methyl, Ethyl, Propyl, Butyl, und des Maleinsäureanhydrids, welche 0,5 bis 40 Gew.-% der Bestandteile aus dem Alkylacrylat oder -methacrylat und 0,5 bis 15% der Bestandteile aus dem Maleinsäureanhydrid enthält, wobei der Rest durch die aus dem Ethylen stammenden Bestandteile gebildet wird;
(ii) den statistischen Terpolymeren des Ethylens, des Alkylacrylats oder -methacrylats mit C₁ bis C₆-Alkylresten, wie Methyl, Ethyl, Butyl, und dem Glycidylacrylat oder -methacrylat, welches 0,5 bis 40 Gew.-% Bestandteile aus dem Alkylacrylat oder -methacrylat und 0,5 bis 15 Gew.-% der Bestandteile aus dem Glycidylacrylat oder - methacrylat enthält, wobei der Rest aus den aus dem Ethylen stammenden Bestandteilen gebildet wird;
(iii)aus Polyethylenen mit niedriger Dichte, die mit Maleinsäureanhydrid gepfropft sind und Polypropylenen, die mit Maleinsäureanhydrid gepfropft sind, die 0,5 bis 15 Gew.-% gepfropfte Bestandteile aus dem Maleinsäureanhydrid enthalten; und
(iv) aus Polyethylen mit niedriger Dichte, die mit Glycidylacrylat oder -methacrylat gepfropft sind und Polypropylene, die mit Glycidylacrylat oder -methacrylat gepfropft sind, die 0,5 bis 15 Gew.-% gepfropfte Bestandteile aus dem Glycidylderivat enthalten.

10. Zusammensetzungen nach einem der Ansprüche 1 bis 9, **dadurch gekennzeichnet, dass** die olefinischen Polymeren mit Epoxyoder COOH-Gruppen einen Fluiditätsindex, bestimmt nach der Norm ASTM D 1238, einen Wert, in Gramm pro 10 Minuten ausgedrückt, haben, der zwischen 0,3 und 3000 und vorzugsweise zwischen 0,5 und 900 liegt.

11. Zusammensetzungen nach einem der Ansprüche 1 bis 10, **dadurch gekennzeichnet, dass** das Bitumen oder Bitumengemisch aus Bitumina ausgewählt ist, die eine kinematische Viskosität bei 100°C zwischen 0,5 x 1⁻⁴ m²/s und 3 x 10⁻² m²/s, vorzugsweise zwischen 1 x 10⁻⁴ m²/s und 2 x 10⁻² m²/s haben.

12. Zusammensetzungen nach Anspruch 11, **dadurch gekennzeichnet, dass** das Bitumen oder Bitumengemisch ein Eindringvermögen (pénétrabilité) bei 25°C, entsprechend der Norm NF T 66004 zwischen 5 und 800, vorzugsweise zwischen 10 und 400 hat.

13. Zusammensetzungen nach einem der Ansprüche 1 bis 12, **dadurch gekennzeichnet, dass** das primäre Polymer ausgewählt ist aus Polybutadien, Polyisopren, Polychloropren, Butadien/Isopren-Copolymeren, Polynorbornenen, Polyisobutylen, Butyl-Kautschuk, Polyethylen mit hoher Dichte, Polyethylen mit niedriger Dichte, Polypropylen, Polybutylen, statistischen Ethylen/Propylen-Copolymeren(EP), statistischen Ethylen/Propylen/Dien-Terpolymeren(EPDM), Ethylen/Vinylacetat-Copolymeren(EVA), Ethylen/Alkylacrylat-Copolymeren mit C₁ bis C₆ Alkylgruppen, insbesondere Ethylen/Methylacrylat-Copolymeren und Ethylen/Butylacrylat-Copolymeren, und Ethylen/Methacrylat-Copolymeren mit C₁ bis C₆ Alkylgruppen, insbesondere Ethylen/Ethylenmethacrylat-Copolymeren und Ethylen/Butylmethacrylat-Copolymeren, Ethylen/Styrol-Copolymeren und Ethylen/Buten/Styrol-Copolymeren.

14. Zusammensetzungen nach einem der Ansprüche 1 bis 13, **dadurch gekennzeichnet, dass** sie dadurch erhalten werden, dass man ein oder mehrere primäre Copolymere und eines oder mehrere olefinische Polymere mit Epoxy- oder COOH-Gruppen in ausgewählten Anteilen mit dem Bitumen oder Bitumengemisch in Berührung bringt, indem man bei Temperaturen zwischen 100 und 230°C, insbesondere zwischen 120 und 190°C, und unter Rühren innerhalb einer Zeit von mindestens 10 Minuten, insbesondere zwischen 10 Minuten und 8 Stunden arbeitet, um eine homogene Masse zu bilden, die die Bitumen/Polymer-Zusammensetzung darstellt.

15. Zusammensetzungen nach einem der Ansprüche 1 bis 14, **dadurch gekennzeichnet, dass** sie 1% bis 40%, insbesondere 2% bis 30%, bezogen auf das Gewicht des Bitumens oder des Bitumengemisches, eines Fließmittels enthalten.

16. Zusammensetzungen nach Anspruch 15, **dadurch gekennzeichnet, dass** das Fließmittel ein Kohlenwasserstofföl darstellt, das einen Destillationsbereich bei Atmosphärendruck, bestimmt nach der Norm ASTM D 86-67, zwischen 100°C und 600°C, insbesondere zwischen 150°C und 400°C hat.

17. Zusammensetzungen nach Anspruch 16, **dadurch gekennzeichnet, dass** das Kohlenwasserstofföl aus Petroleumschnitten mit aromatischem Charakter, Petroleumachnitten mit naphtenischaromatischem Charakter, Petroleumschnitten mit naphtenischparafinischem Charakter, Petroleumschnitten mit parafinischem Charakter, Ölen aus Kohle und Ölen pflanzlichen Ursprungs ausgewählt ist.

18. Zusammensetzungen nach Anspruch 16 oder 17, **dadurch gekennzeichnet, dass** sie dadurch erhalten werden, dass das Olefinpolymer mit den Epoxy- oder COOH-Gruppen und das primäre Polymer in Form einer Mutterlösung dieser Polymeren in einem Kohlenwasserstofföl, das das Fließmittel darstellt, dem Bitumen oder dem Bitumengemisch zugesetzt werden.

19. Zusammensetzungen nach Anspruch 18, **dadurch gekennzeichnet, dass** die Mutterlösung, bezogen auf das Gewicht des Kohlenwasserstofföls, 1% bis 20% des Olefinpolymers mit Epoxyoder COOH-Gruppen und 5% bis 30% des primären Polymers enthält.

20. Zusammensetzungen nach Anspruch 18 oder 19, **dadurch gekennzeichnet, dass** sie dadurch erhalten werden, dass man die Mutterlösung mit dem Bitumen oder Bitumengemisch vermischt, indem man bei Temperaturen zwischen 100 und 230°C, insbesondere zwischen 120°C und 190°C unter Rühren arbeitet, worauf man das erhaltene Gemisch auf Temperaturen zwischen 100°C und 230°C, insbesondere zwischen 120°C und 190°C über einen Zeitraum von mindestens 10 Minuten, insbesondere von 10 Minuten bis 2 Stunden hält, um das Reaktionsgemisch zu bilden, das die Bitumen/Polymer-Zusammensetzung darstellt.

21. Zusammensetzungen nach einem der Ansprüche 1 bis 20, **dadurch gekennzeichnet, dass** sie einen oder mehrere, nichtpolymere Zusätze, die mit den Epoxy- oder COOH-Gruppen des olefinpolymers, das diese Gruppen enthält, zu reagieren vermögen, wobei diese reaktiven Zusätze insbesondere Amine, speziell primäre oder sekundäre Polyamine, Alkohole, insbesondere Polyole, Säuren, insbesondere Polysäuren oder auch Metallsalze, insbesondere die Verbindungen von Metallen der Gruppen I, II, III und VIII des Periodensystems, enthält.

22. Zusammensetzungen nach Anspruch 21, **dadurch gekennzeichnet, dass** die Menge des reaktiven Zusatzes oder der reaktiven Zusätze, die sie enthält, 0,01% bis 10%, vorzugsweise 0,05% bis 5%, des Gewichts des Bitumens ausmacht.

23. Anwendung der Bitumen-Polymerzusammensetzungen nach einem der Ansprüche 1 bis 22, zur Herstellung von Bitumen/Polymer-Bindemitteln, wobei die Bindemittel aus diesen Zusammensetzungen als solche bestehen oder durch Verdünnung dieser Bitumen/Polymer-Zusammensetzungen durch ein Bitumen oder Bitumengemisch oder durch eine Bitumen/Polymer-Zusammensetzung nach einem der Ansprüche 1 bis 22 mit einem geringen Gehalt an primären Polymeren und aus einem olefinischen Polymer mit Epoxy- oder COOH-Gruppen gebildet wurden, wobei diese Bitumen/Polymer-Bindemittel insbesondere direkt oder als wässrige Emulsion zur Erzeugung von Überzügen, insbesondere von Straßendecken mit oberflächlichem Überzug für die Herstellung von Überzügen, die in der Hitze oder Kälte aufgebracht werden, oder für die Herstellung von Dichtungsüberzügen verwendet werden.
